# EUROPÄISCHE PATENTSCHRIFT

(11) **EP 3 819 095 B1**
(45) Veröffentlichungstag und Bekanntmachung des Hinweises auf die Patenterteilung: **09.07.2025**
(21) Anmeldenummer: 20206718.7
(22) Anmeldetag: 10.11.2020
(51) Int. Cl.: B29C 37/00, B29C 33/10, B29C 33/42

(54) **VERFAHREN ZUR HERSTELLUNG EINER FAHRRADKOMPONENTE UND FAHRRADKOMPONENTE**
METHOD OF MANUFACTURING A BICYCLE COMPONENT AND BICYCLE COMPONENT
PROCÉDÉ POUR LA FABRICATION D'UN COMPOSANT DE VÉLO ET COMPOSANT DE VÉLO

(30) Priorität: 11.11.2019 DE 102019130341
(43) Veröffentlichungstag der Anmeldung: 12.05.2021
(73) Patentinhaber: DT Swiss AG, 2504 Biel (CH)
(72) Erfinder: Kiechl, Olivier, 4513 Langendorf (CH); Steiner, Kevin, 2542 Pieterlen (CH)
(74) Vertreter: BSB Patentanwälte Schütte & Engelen Partnerschaft mbB

(56) Entgegenhaltungen:
- EP-A1- 2 765 009
- US-A1- 2011 017 385
- US-A1- 2015 096 672
- US-B1- 10 118 315

## Beschreibung

Die vorliegende Erfindung betrifft ein Verfahren zur Herstellung einer Fahrradkomponente mit wenigstens einem Komponentenkörper, welcher wenigstens zum Teil aus wenigstens einem Faserverbundwerkstoff in wenigstens einem Formwerkzeug geformt wird sowie eine solche Fahrradkomponente. Fahrradkomponenten aus Faserverbundwerkstoffen bieten im Verhältnis zur Festigkeit ein besonders geringes Gewicht und werden daher oft bei wettkampforientierten Sportfahrrädern eingesetzt.

Die US 2015/096672 A1 zeigt ein Verfahren zur Herstellung einer Felge, bei welcher die Bremsflanken aus einem anderen Werkstoff als der Rest der Felge bestehen. Zunächst wird mit einer Form ein Vorformling aus Kohlefaserverbundwerkstoff hergestellt. Dann wird im Bereich der (späteren) Bremsflanken ein Harz auf den Vorformling aufgetragen und beides zusammen wieder in die Form eingelegt. Unter Hitze und Druck wird das Harz an den Vorformling gefügt, sodass die Felge und die Bremsflanken abschließend geformt und fest verbunden werden. Es wird vorgeschlagen, die Form im Bereich der Bremsflanke aufzurauen, damit die spätere Bremsflanke eine raue Oberfläche aufweist. Dadurch soll eine Verbesserung der Reibeigenschaften der Bremsflanke erreicht werden. Die aufgeraute Form kann sowohl für die Herstellung des Vorformlings als auch für die Verbindung von Vorformling und Bremsflanke eingesetzt werden. Durch den aufgerauten Vorformling soll eine Verbesserung der Haftungseigenschaften des Harzes am Vorformling erreicht werden.

Allerdings ist nach dem Ausformen des Komponentenkörpers oft eine aufwendige Nachbehandlung notwendig, um Fehlstellen und beispielsweise kleine Senken bzw. Krater oder Riefen zu beseitigen. Diese Oberflächenfehler bringen in der Regel zwar keine Stabilitätseinbußen mit sich, sind aber auch mit bloßem Auge klar ersichtlich. Daher dient die Nachbehandlung meist dazu, die optische Qualität zu optimieren und beispielsweise die besonderen Ansprüche von High End Fahrradkomponenten zu erfüllen.

Um die Krater aufzufüllen und eine ebene bzw. glatte Oberfläche zu erzeugen, wird häufig eine Füllmasse aufgetragen. Alternativ oder zusätzlich können Unebenheiten mechanisch abgetragen werden. Anschließend erfolgt in der Regel noch eine Lackierung, um die Oberfläche einheitlich abzuschließen. Damit die Lackierung zuverlässig hält, geht dieser üblicherweise noch ein Schleifen voraus.

Demgegenüber ist es die Aufgabe der vorliegenden Erfindung, eine unaufwendige und zugleich zuverlässige Lösung in Bezug auf die zuvor diskutierten Oberflächenfehler bei der Herstellung von Fahrradkomponenten zu bieten.

Diese Aufgabe wird gelöst durch ein Verfahren mit den Merkmalen des Anspruchs 1 sowie durch eine Fahrradkomponente mit den Merkmalen des Anspruchs 15. Bevorzugte Weiterbildungen der Erfindung sind Gegenstand der Unteransprüche. Weitere Vorteile und Merkmale der vorliegenden Erfindung ergeben sich aus dem Ausführungsbeispiel.

Das erfindungsgemäße Verfahren dient zur Herstellung einer Fahrradkomponente mit wenigstens einem Komponentenkörper. Die Fahrradkomponente ist insbesondere für ein wenigstens teilweise mit muskelkraftbetriebenes Fahrrad vorgesehen. Der Komponentenkörper wird wenigstens zum Teil, insbesondere vollständig, aus wenigstens einem Faserverbundwerkstoff in wenigstens einem Formwerkzeug (insbesondere erstmalig bzw. ursprünglich) geformt. Insbesondere wird der Komponentenkörper wenigstens zum Teil, insbesondere vollständig, aus dem Faserverbundwerkstoff im Formwerkzeug urgeformt, also darin erstmalig in seine Form gebracht. Insbesondere wird dadurch aus dem (vorbereiteten und) noch nicht verfestigten bzw. weichen (und insbesondere in Hinblick auf die endgültige Form des Komponentenkörpers noch formlosen; dabei kann der Faserverbundwerkstoff jedoch eine gezielte Faserausrichtung und/oder Faserschichtung bzw. Laminierung aufweisen, z. B. können Prepregs vorgesehen sein) Faserverbundwerkstoff der Komponentenkörper erzeugt bzw. ursprünglich/erstmalig ausgeformt. Eine solche erstmalige Formgebung wird auch als Urformen bezeichnet. Dabei wird wenigstens ein zur Formung wenigstens eines Außenabschnitts des Komponentenkörpers dienender Formbereich des Formwerkzeugs gezielt mit wenigstens einer Oberflächenrauheit ausgestattet. Insbesondere wird mittels der Oberflächenrauheit des Formbereichs auch eine gezielte Oberflächenrauheit für den Außenabschnitt während (insbesondere zeitgleich mit) der Erzeugung des Außenabschnitts hergestellt. Vorzugsweise wird die Oberflächenrauheit in den Formbereich eingearbeitet. Dabei wird der Formbereich auf einen Mittenrauwert von wenigstens 1 Mikrometer und maximal 4 Mikrometer aufgeraut. Insbesondere werden dadurch Oberflächenfehlern des geformten Außenabschnitts entgegengewirkt.

Das erfindungsgemäße Verfahren bietet viele Vorteile.

Besonders vorteilhaft ist die Oberflächenrauheit im Formbereich, da dadurch Störungen in der Oberfläche des geformten Außenabschnitts zuverlässig vermieden werden können. Durch die gezielt erzeugte Oberflächenrauheit im Formwerkzeug wird die Einheitlichkeit und optische Qualität der Oberfläche erheblich erhöht. So kann auf eine aufwendige Oberflächennachbearbeitung im Anschluss an den Formprozess verzichtet werden. Dadurch weist der Außenbereich unmittelbar nach dem Ausformen eine durch die Oberflächenrauheit des Formbereichs erzeugte Oberflächenrauheit auf. So weist der Außenabschnitt direkt nach dem Ausformen schon eine vollständig oder zumindest weitgehend fertige Oberfläche auf. Besonders vorteilhaft ist auch, dass das Einarbeiten der Oberflächenrauheit in das Formwerkzeug besonders unaufwendig umsetzbar ist. Insgesamt kann mit der Erfindung eine hohe Sichtqualität bzw. hochwertigere optische Erscheinung der Oberflächen von Fahrradkomponenten besonders wirtschaftlich und zuverlässig erreicht werden.

Vorzugsweise wird als Fahrradkomponente eine Felge für ein Laufrad für ein wenigstens teilweise mit Muskelkraft betriebenes Fahrrad hergestellt. Insbesondere umfasst die Felge dabei wenigstens einen den Komponentenkörper bereitstellenden Felgenkörper. Insbesondere ist der Felgenkörper wenigstens zum Teil aus dem Faserverbundwerkstoff in dem Formwerkzeug geformt. Insbesondere ist der Außenabschnitt Teil des Felgenkörpers. In einer solchen Ausgestaltung kann das Verfahren besonders vorteilhaft eingesetzt werden. So lassen sich sehr unaufwendig Felgen mit besonders einheitlicher und fehlerfreier Oberfläche herstellen.

Vorzugsweise können im Rahmen der vorliegenden Erfindung der Begriff "Fahrradkomponente" durch den Begriff "Felge" sowie der Begriff "Komponentenkörper" durch den Begriff "Felgenkörper" ausgetauscht werden.

Insbesondere umfasst der Felgenkörper wenigstens eine Felgenflanke und vorzugsweise wenigstens zwei Felgenflanken. Insbesondere verlaufen die Felgenflanken jeweils seitlich an der Felge. Insbesondere sind die Felgenflanken axial an der Felge angeordnet. Insbesondere erstrecken sich die Felgenflanken in radialer Richtung und verlaufen umfänglich um die Felge. Es ist möglich, dass sich die Felgenflanken an einem radial inneren Ende des Felgenkörpers und/oder an einem radial äußeren Ende des Felgenkörpers treffen. Dort können die Felgenflanken direkt oder mittelbar über wenigstens eine weitere Struktur, z. B. Felgenboden oder Felgenbett, miteinander verbunden sein.

Möglich ist, dass der Felgenkörper wenigstens einen Felgenboden und/oder wenigstens ein Felgenbett umfasst. Insbesondere sind wenigstens zwei den Felgenboden mit dem Felgenbett verbindende Felgenflanken vorgesehen. Der Außenabschnitt wird insbesondere von den Felgenflanken und/oder dem Felgenboden und/oder dem Felgenbett bereitgestellt. Insbesondere erstreckt sich der Außenabschnitt über die gesamte im bestimmungsgemäßen Zustand sichtbare Außenseite des Felgenkörpers und vorzugsweise wenigstens einer und insbesondere beider Felgenflanken und/oder des Felgenbodens und/oder des Felgenbetts. Die Felgenflanken können jeweils ein Felgenhorn aufweisen.

Der der Felgenkörper wird insbesondere durch wenigstens ein separat geformtes Teil bereitgestellt. Es ist möglich, dass der Felgenkörper aus wenigstens zwei separat geformten Teilen besteht, welche miteinander zusammengefügt sind. Dabei ist möglich, dass jedes Teil wenigstens eine der Felgenflanken aufweist. Der Außenabschnitt kann sich über beide Teile oder auch nur über ein Teil erstrecken. Insbesondere werden die Teile nacheinander in einem Formwerkzeug oder gleichzeitig in verschiedenen Formwerkzeugen geformt. Insbesondere sind dann die Formwerkzeuge, welche zur Formung eines mit dem Außenabschnitt versehenen Teils dienen, mit jeweils wenigstens einem Formbereich mit der Oberflächenrauheit ausgestattet.

Die Fahrradkomponente ist insbesondere für ein wenigstens teilweise mit Muskelkraft betriebenes Fahrrad vorgesehen. Als Fahrradkomponente können auch eine Nabe und/oder Gabel und/oder Sattelstütze und/oder Bremse und/oder ein Lenker und/oder Vorbau und/oder Rahmen hergestellt werden. Insbesondere stellen dann eine Nabenhülse und/oder Gabelbrücke und/oder ein Gabelbein und/oder Sattelstützrohr und/oder Bremsarm und/oder Lenkerrohr und/oder Vorbaurohr und/oder Rahmenabschnitt den Komponentenkörper bereit. Entsprechend ist es möglich, dass der Begriff "Fahrradkomponente" durch den jeweiligen Begriff "Nabe", "Gabel", "Sattelstütze", "Bremse", "Rahmen", "Lenker" ausgetauscht werden kann.

In allen Ausgestaltungen ist es besonders bevorzugt, dass wenigstens der Außenabschnitt beschichtet, vorzugsweise lackiert, wird. Insbesondere wird der Außenabschnitt wenigstens teilweise und vorzugsweise im Wesentlichen vollständig, insbesondere vollständig, beschichtet. Bevorzugt wird eine teiltransparente oder transparente Lackierung aufgetragen. Daran ist besonders vorteilhaft, dass auf dem erfindungsgemäß hergestellten Außenabschnitt auch ohne Vorbehandlungen eine optimale Lackierung erzielt werden kann. Beispielsweise kann auf ein Spachteln oder Füllern verzichtet werden.

Insbesondere wird wenigstens eine Beschichtung, vorzugsweise wenigstens eine Lackierung, aufgetragen. Die Beschichtung umfasst insbesondere wenigstens eine Schicht. Die Lackierung umfasst insbesondere wenigstens eine Lackschicht und/oder wenigstens eine Grundschicht und/oder wenigstens eine Deckschicht. Insbesondere ist die Lackschicht oberhalb der Grundschicht und/oder unterhalb der Deckschicht angeordnet.

Besonders bevorzugt ist der Formbereich mit einer Oberflächenrauheit ausgestattet, welche dazu geeignet und ausgebildet ist, die Haftung für eine aufzutragende Beschichtung zu verbessern. So wird ohne wesentlichen Mehraufwand zusätzlich zu den zuvor genannten Vorteilen auch noch eine erheblich verbesserte Beschichtungshaftung bzw. Lackhaftung erreicht. In einer solchen Ausgestaltung sind insbesondere die im Rahmen der vorliegenden Erfindung beschriebenen Oberflächenrauheiten besonders geeignet und vorteilhaft einsetzbar. Insbesondere ist die Oberflächenrauheit an die aufzutragende Beschichtung und beispielsweise an deren Anforderungen an die zu beschichtete Oberfläche angepasst.

Vorzugsweise wird der Außenabschnitt nach der im Formwerkzeug erfolgten Formung beschichtet, ohne zuvor eine insbesondere abtragende Oberflächenbehandlung erfahren zu haben. Insbesondere wird der Außenabschnitt in dem Zustand beschichtet, indem er im Formbereich des Formwerkzeugs geformt wurde. Eine solche Ausgestaltung ist besonders wirtschaftlich und führt zugleich aufgrund der Oberflächenrauheit im Formbereich zu besonders optimalen Beschichtungsergebnissen. Unter einer abtragenden Oberflächenbehandlung werden dabei insbesondere mechanische und/oder nicht mechanische Behandlungen verstanden, beispielsweise spanabhebende, chemische, elektrochemische, thermische Behandlungsverfahren.

Vorzugsweise wird wenigstens eine nach außen abschließende Beschichtung, insbesondere Lackierung, direkt auf den Außenabschnitt aufgetragen. So kann das Gewicht erheblich reduziert werden. Insbesondere ist der Außenabschnitt dabei in einem solchen Zustand, wie er im Formbereich des Formwerkzeugs geformt wurde. Insbesondere erfolgt eine nach außen abschließende Beschichtung ohne eine zuvor erfolgte Beschichtung und beispielsweise Grundierung oder dergleichen. Insbesondere erfolgt zuvor kein Auftragen eines Füllers und/oder einer Spachtelmasse oder dergleichen. Es hat sich in Versuchen gezeigt, dass aufgrund der gezielten Oberflächenrauheit im Formbereich auch eine besonders hohe Oberflächenqualität der Beschichtung und im Besonderen eine erheblich verbesserte Adhäsion für die Beschichtung erzielt werden. Möglich ist aber auch, dass wenigstens eine Beschichtung unterhalb der nach außen abschließenden Beschichtung vorgesehen ist. Beispielsweise kann eine Grundierung oder dergleichen vorgesehen sein.

Der Formbereich wird insbesondere auf einen Mittenrauwert (Ra) von wenigstens 1 µm und vorzugsweise wenigstens 1,1 µm und besonders bevorzugt wenigstens 1,2 µm aufgeraut. Vorteilhaft und bevorzugt ist auch ein Mittenrauwert von wenigstens 1,3 µm oder wenigstens 1,4 µm oder wenigstens 1,5 µm oder wenigstens 1,6 µm oder wenigstens 1,7 µm oder wenigstens 1,8 µm oder wenigstens 1,9 µm. Solche Untergrenzen für den Mittenrauwert haben sich als besonders vorteilhaft erwiesen. Es können auch Mittenrauwerte von wenigstens 0,5 µm oder wenigstens 0,6 µm oder wenigstens 0,7 µm oder wenigstens 0,8 µm oder wenigstens 0,9 µm vorgesehen sein. Der Mittenrauwert gibt insbesondere den mittleren Abstand eines auf der Oberfläche liegenden Messpunktes zu einer Mittellinie an. Der Mittenrauwert entspricht insbesondere dem arithmetischen Mittel der betragsmäßigen Abweichung von der Mittellinie. Möglich und vorteilhaft sind auch Mittenrauwerte von wenigstens 2 µm oder wenigstens 2,2 µm oder wenigstens 2,5 µm. Es können auch Mittenrauwerte von wenigstens 2,8 µm oder wenigstens 3 µm oder wenigstens 4 µm vorgesehen sein.

Insbesondere wird der Formbereich auf einen Mittenrauwert von maximal 4 µm und vorzugsweise maximal 3 µm und besonders bevorzugt maximal 2,8 µm aufgeraut. Möglich und vorteilhaft ist, dass der Formbereich auf einen Mittenrauwert von maximal 2,5 µm und vorzugsweise 2,2 µm und besonders bevorzugt 2 µm aufgeraut wird. Der Mittenrauwert kann auch maximal 1,9 µm oder maximal 1,8 µm betragen. Solche Obergrenzen für den Mittenrauwert haben sich in Versuchen als besonders vorteilhaft erwiesen.

Als besonders vorteilhaft für den Formbereich haben sich Mittenrauwerte zwischen 1,3 µm und 1,9 µm und bevorzugt zwischen 1,4 µm und 1,8 µm und besonders bevorzugt zwischen 1,5 µm und 1,7 µm erwiesen. Beispielsweise ist ein Mittenrauwert von 1,6 µm vorgesehen. Als vorteilhaft bei bestimmten Legierungen des Formwerkzeugs hat sich auch ein Mittenrauwert von 1,8 µm erwiesen. Insbesondere wird der Mittenrauwert auch auf die Legierung des Formwerkzeugs abgestimmt.

Es ist möglich, dass die zuvor genannten Mittenrauwerte mit Abweichungen im Bereich von +/- 0,1 µm oder +/- 0,2 µm behaftet sind. Es ist möglich und vorteilhaft, dass der Außenabschnitt eine Oberflächenrauheit mit einem Mittenrauwert aufweist, wie er zuvor für die Oberflächenrauheit des Formbereichs angegeben wurde.

Insbesondere (und insbesondere auch technisch bedingt) weist der Außenabschnitt eine Oberflächenrauheit mit einem Mittenrauwert auf, welcher um ein definiertes Maß größer ist als der Mittenrauwert für die Oberflächenrauheit des Formbereichs. Insbesondere weist der Außenabschnitt eine Oberflächenrauheit mit einem Mittenrauwert zwischen 1,8 µm und 5,8 µm und bevorzugt zwischen 2,8 µm und 4,8 µm und besonders bevorzugt zwischen 3,5 µm und 4,0 µm auf. Beispielsweise ist ein Mittenrauwert für den Außenbereich von 3,8 µm vorgesehen. Dabei weist der Außenabschnitt insbesondere eine Oberflächenrauheit mit einer gemittelten Rautiefe (Rz) zwischen 20 µm und 30 µm und beispielsweise von 25 µm mit einer maximalen Rautiefe (Rz max) von 33 µm 33 auf. Solche Werte können mit der zuvor beschriebenen Oberflächenrauheit des Formbereichs vorteilhaft umgesetzt werden.

Die Oberflächenrauheit des Formbereichs wird insbesondere mittels wenigstens eines mechanischen und/oder nicht mechanischen Abtragungsverfahrens erzeugt. Bevorzugt wird die Oberflächenrauheit des Formbereichs mittels wenigstens einer Lasertexturierung erzeugt. Insbesondere weist der geformte Außenabschnitt eine Lasertextur auf. Das bietet ein wirtschaftliches und zugleich besonders gezieltes Erzeugen der Rauheit.

Bevorzugt und vorteilhaft ist ebenfalls, dass die Oberflächenrauheit des Formbereichs mittels wenigstens eines Strahlverfahrens (auch als Strahlspanen bezeichnet) und besonders bevorzugt mittels Kugelstrahlen erzeugt wird. Auch das bietet ein wirtschaftliches und zugleich besonders gezieltes Erzeugen der Rauheit. Es hat sich gezeigt, dass unter bestimmten Voraussetzungen ein Kugelstrahlen besondere Vorteile gegenüber einer Lasertexturierung bieten kann. Möglich sind auch andere geeignete Strahlverfahren. Die beim Strahlverfahren eingesetzten Strahlteilchen können auch eine andere als eine kugelförmige Geometrie aufweisen.

Möglich sind auch geeignete kombinierte Verfahren, z. B. Kugelstrahlen und Lasertexturierung. Die im Rahmen der vorliegenden Erfindung vorgestellten Verfahren sind daher insbesondere in einer und/oder Verknüpfung offenbart. In allen Ausgestaltungen ist es bevorzugt, dass der Formbereich vor der Erzeugung der Oberflächenrauheit poliert wird.

Unter einem mechanischen Abtragungsverfahren werden dabei insbesondere geeignete Trennverfahren verstanden. Beispielsweise kann wenigstens ein Zerspanungsverfahren eingesetzt werden. Möglich ist ein Zerspanungsverfahren mit einer geometrisch unbestimmten Schneide, beispielsweise Schleifen, Strahlspanen und vorzugsweise Kugelstrahlen. Es kann auch ein Zerspanungsverfahren mit einer geometrisch bestimmten Schneide vorgesehen sein, beispielsweise Fräsen oder dergleichen. Als nicht nichtmechanisches Abtragungsverfahren kann beispielsweise ein thermisches, chemisches, elektrisches und/oder elektrochemisches Abtragen vorgesehen sein. Beispielsweise können ein Erodieren und/oder Ätzen vorgesehen sein. Möglich sind auch andere geeignete Verfahren zur Aufrauung.

Insbesondere wird wenigstens ein Laser rasterartig und/oder mit unterschiedlicher Intensität und/oder Geschwindigkeit und/oder Häufigkeit über den Formbereich bewegt. Insbesondere wird der Formbereich dadurch mit Überlagerungsstrukturen ausgestattet. Dabei weisen die Überlagerungsstrukturen insbesondere die gleiche oder eine gezielt unterschiedliche Oberflächenrauheit zum übrigen Formbereich auf. Insbesondere liegt auch bei einer unterschiedlichen Oberflächenrauheit der Mittenrauwert für die Überlagerungsstrukturen und für den übrigen Formbereich innerhalb des zuvor definierten Wertebereichs. Insbesondere sind die Überlagerungsstrukturen selbst um den Faktor 10 und vorzugsweise wenigstens um den Faktor 100 oder auch um den Faktor 500 oder mehr größer als der Mittenrauwert ihrer Oberflächenrauheit. Mit solchen Überlagerungsstrukturen können Störungen in der Oberfläche des Außenabschnitts besonders zuverlässig vermieden werden.

Die Überlagerungsstrukturen umfassen insbesondere Überlagerungslinien. Insbesondere werden die Überlagerungsstrukturen durch jeweils wenigstens eine Überlagerungslinie bereitgestellt. Die Überlagerungslinien sind insbesondere wenigstens teilweise beabstandet angeordnet. Insbesondere überkreuzen sich die Überlagerungslinien wenigstens teilweise. Die Überlagerungslinien können wenigstens teilweise geradlinig sein oder auch einen gekrümmten Verlauf aufweisen. Möglich sind auch wenigstens teilweise flächig ausgebildete Überlagerungsstrukturen. Es ist möglich, dass die Überlagerungsstrukturen gegenüber ihrer Umgebung wenigstens teilweise (nur sehr geringfügig) vertieft und/oder erhaben sind.

Vorzugsweise wird das Formwerkzeug mit Entlüftungskaminen ausgestattet. Vorzugsweise sind die Entlüftungskamine dazu geeignet und ausgebildet, einer Bildung von Lufteinschlüssen und insbesondere Luftblasen und/oder Trockenstellen (Bereiche ohne ausreichendes Matrixmaterial) während der Formgebung im Formwerkzeug entgegen zu wirken. Insbesondere wird einem Auftreten von Lufteinschlüssen dadurch entgegenwirkt, dass zwischen dem Formbereich und dem Außenabschnitt vorhandene Luft entlang der Entlüftungskamine entweichen kann. Insbesondere wird einem Auftreten von Trockenstellen auch dadurch entgegenwirkt, dass ein Matrixmaterial des Faserverbundwerkstoffs (z. B. Harz) über die Entlüftungskamine verteilt wird. Durch solche Entlüftungskamine wird eine besonders hochwertige Oberfläche des Außenabschnitts erzielt, welche nach dem Entformen keine oder nahezu keine Nachbearbeitung benötigt.

Dabei kann sich der mit der Oberflächenrauheit ausgestattete Formbereich nur über die Entlüftungskamine erstrecken, sodass die Entlüftungskamine den Formbereich bereitstellen. Die außerhalb des Formbereichs liegenden Bereiche des Formwerkzeugs sind dann insbesondere poliert. Die Entlüftungskamine können sich aber auch nur über einen Teilbereich des Formbereichs erstrecken. Dann können die Entlüftungskamine die gleiche oder eine gezielt unterschiedliche Oberflächenrauheit zum übrigen Formbereich aufweisen. Insbesondere liegt dann der Mittenrauwert für die Entlüftungskamine und für den übrigen Formbereich innerhalb des zuvor definierten Wertebereichs. Die Entlüftungskamine können radial und/oder tangential über die Felgenflanke verlaufen.

Besonders bevorzugt werden die Entlüftungskamine durch die Überlagerungsstrukturen bereitgestellt oder sind ein Teil der Überlagerungsstrukturen. Insbesondere werden die Entlüftungskamine derart hergestellt, wie es zuvor für die Überlagerungsstrukturen beschrieben wurde. Insbesondere weisen die Entlüftungskamine eine Geometrie auf, wie sie zuvor für die Überlagerungsstrukturen beschrieben wurde. Die Entlüftungskamine können auch in anderer Weise hergestellt werden.

Der Formbereich wird vorzugsweise derart im Formwerkzeug angeordnet, dass sich der Außenabschnitt über wenigstens 50 % und vorzugsweise wenigstens 75 % einer Außenseite des Komponentenkörpers erstreckt. Der Formbereich kann auch derart im Formwerkzeug angeordnet werden, dass sich der Außenabschnitt über wenigstens 90 % der Außenseite erstreckt. Der Außenabschnitt kann sich auch vollständig über die Außenseite des Komponentenkörpers erstrecken. Es kann vorgesehen sein, dass sich der Außenabschnitt über wenigstens 20 % oder wenigstens 30 % oder wenigstens 40 % der Außenseite des Komponentenkörpers erstreckt. Die zuvor gemachten Flächenangaben beziehen sich besonders bevorzugt auf eine Außenseite wenigstens einer Felgenflanke und vorzugsweise beider Felgenflanken des Felgenkörpers. Insbesondere beziehen sich die zuvor gemachten Flächenangaben auf eine in einem bestimmungsgemäßen Montagezustand der Fahrradkomponente sichtbare Außenfläche.

In einer besonders vorteilhaften Ausgestaltung wird der Formbereich derart im Formwerkzeug angeordnet, dass sich der Außenabschnitt wenigstens über die Felgenflanken erstreckt. Bevorzugt wird der Formbereich derart im Formwerkzeug angeordnet, dass der Außenabschnitt wenigstens radial unterhalb einer Bremsflanke und/oder wenigstens radial unterhalb einer Mittellinie der Felgenflanke angeordnet ist. Vorteilhaft und bevorzugt ist auch, dass der Formbereich derart im Formwerkzeug angeordnet wird, dass sich der Außenabschnitt wenigstens radial oberhalb einer Mittellinie der Felgenflanke erstreckt. Insbesondere ist der Außenabschnitt an beiden Felgenflanken derart ausgebildet. Insbesondere erstreckt sich der Außenabschnitt wenigstens über die Felgenflanken und/oder wenigstens über den Felgenboden und/oder wenigstens über das Felgenbett. Das bietet viele Vorteile bei der Herstellung von besonders hochwertigen Felgen.

In dem Fall, dass die Felge wenigstens eine Bremsflanke aufweist, erstreckt sich der Außenabschnitt insbesondere wenigstens außerhalb der Bremsflanke und vorzugsweise auch über die Bremsflanke. Die hergestellte Felge kann auch keine Bremsflanken aufweisen und beispielsweise als eine Felge für Scheibenbremsen ausgebildet sein.

Es ist möglich, dass das Formwerkzeug wenigstens einen außerhalb des Formbereichs angeordneten Bremsflankenformbereich zur Formung wenigstens einer Bremsflanke aufweist. Vorzugsweise wird der Bremsflankenformbereich mit Reibelementen ausgestattet, welche wenigstens um den Faktor 10 und wenigstens um den Faktor 100 oder auch um den Faktor 500 oder mehr größer als ein Mittenrauwert der Oberflächenrauheit des Formbereichs sind. Die Reibelemente umfassen insbesondere Erhebungen und/oder Vertiefungen. Die Größe der Reibelemente bezieht sich insbesondere auf eine Höhe bzw. Tiefe von Erhebungen bzw. Vertiefungen.

Es ist möglich und vorteilhaft, dass die Reibelemente selbst bzw. der Bremsflankenformbereich selbst mit einer wie zuvor beschrieben ausgebildeten Oberflächenrauheit ausgestattet werden. Dabei erstreckt sich die Oberflächenrauheit insbesondere auch über den Bremsflankenformbereich. So bieten die Reibelemente neben der Bremswirkung zugleich auch eine besonders gute Sichtqualität oder auch eine besonders gute Haftung für eine Beschichtung. Möglich ist auch, dass die Reibelemente im Bremsflankenformbereich mit keiner gezielten Oberflächenrauheit ausgestattet werden. Der Bremsflankenformbereich kann dabei zusätzlich zu den Reibelementen eine verringerte und/oder erhöhte Oberflächenrauheit oder die gleiche Oberflächenrauheit wie der Formbereich aufweisen. Insbesondere umfasst die Felge wenigstens eine mittels eines solchen Bremsflankenformbereichs geformte Bremsflanke.

Insbesondere wird der Formbereich mit einer durchgehenden Oberflächenrauheit ausgestattet. Vorteilhaft ist auch, dass der Formbereich mit einer konstanten Oberflächenrauheit ausgestattet wird. Insbesondere ist ein gleichbleibender Mittenrauwert vorgesehen. Das ermöglicht eine besonders unaufwendige Erzeugung des Formbereichs und zugleich die Herstellung von besonders einheitlichen Oberflächen. Der Formbereich kann auch mit wenigstens zwei unterschiedlichen Oberflächenrauheiten ausgestattet werden. Dabei liegen die Mittenrauwerte der unterschiedlichen Oberflächenrauheiten vorzugsweise innerhalb der zuvor definierten Wertebereiche.

Möglich und bevorzugt ist auch, dass der Formbereich mit wenigstens zwei oder einer Vielzahl von unterschiedlichen Oberflächenrauheiten ausgestattet wird. Das bietet eine besonders unaufwendige Möglichkeit zur Erzeugung von unterschiedlich matten bzw. unterschiedlich glänzenden Flächenabschnitten am Komponentenkörper. Möglich ist auch, dass durch die unterschiedlichen Oberflächenrauheiten das Reflexionsverhalten von Beschichtungen und beispielsweise Lackierungen gezielt beeinflusst wird.

Es kann vorgesehen sein, dass der Formbereich Formelemente zur Formung von erhabenen und/oder eingelassenen Ornamenten auf dem Außenabschnitt umfasst. Dabei erstreckt sich die Oberflächenrauheit insbesondere auch über die Formelemente. Dadurch können die Ornamente unaufwendig mit einer besonders hohen Sichtqualität ausgestattet werden. Insbesondere weisen die Ornamente die gleiche Oberflächenrauheit wie der Außenabschnitt auf. So werden Oberflächenfehler auch bei den Ornamenten vermieden und aufwendige Nacharbeiten eingespart. Möglich ist aber auch, dass die Formelemente außerhalb des Formbereichs liegen und/oder nicht mit der Oberflächenrauheit ausgestattet werden. Insbesondere weisen die Ornamente Strukturen auf, welche wenigstens um den Faktor 10 und vorzugsweise wenigstens um den Faktor 100 oder auch um den Faktor 500 oder mehr größer als der Mittenrauwert der Oberflächenrauheit des Formbereichs sind.

Möglich ist, dass die Formelemente gezielt eine geringere und/oder höhere Oberflächenrauheit als der übrige Außenabschnitt aufweisen, um einen unterschiedlichen Grad an Glanz und/oder Mattheit am Komponentenkörper zu erzeugen.

Dadurch können die Ornamente besonders unaufwendig hervorgehoben werden. Zudem kann dadurch auf eine Lackierung verzichtet werden, sodass Gewicht eingespart und die Umweltbilanz verbessert wird.

Besonders bevorzugt ist nach einer Entnahme des Komponentenkörpers aus dem Formwerkzeug wenigstens eine Oberflächenbehandlung des Außenabschnitts zur Reduzierung und/oder Beseitigung von Unebenheiten vorgesehen. Dabei wird diese Oberflächenbehandlung vorzugsweise durch das gezielte Einarbeiten der Oberflächenrauheit in den Formbereich ersetzt. So kann diese Oberflächenbehandlung bereits vor der Formung des Komponentenkörpers ersetzt werden. Das bietet eine erhebliche Verbesserung sowohl der Fertigung als auch des Produkts.

Die erfindungsgemäße Fahrradkomponente umfasst wenigstens einen Komponentenkörper. Der Komponentenkörper ist wenigstens zum Teil aus wenigstens einem Faserverbundwerkstoff in wenigstens einem Formwerkzeug geformt. Dabei weist wenigstens ein Außenabschnitt des Komponentenkörpers eine (insbesondere zeitgleich mit dessen erstmaliger Formgebung) gezielt erzeugte Oberflächenrauheit auf. Eine solche Fahrradkomponente löst die erfindungsgemäße Aufgabe ebenfalls besonders vorteilhaft.

Die erfindungsgemäße Fahrradkomponente ist insbesondere nach dem erfindungsgemäßen Verfahren hergestellt. Möglich und vorteilhaft ist aber auch, dass die erfindungsgemäße Fahrradkomponente eine nach einem anderen geeigneten Verfahren hergestellte Oberflächenrauheit aufweist. Beispielsweise kann die Oberflächenrauheit durch wenigstens einen der Formung im Formwerkzeug nachgelagerten mechanischen und/oder nicht mechanischen Abtragungsprozess erzeugt sein. Bevorzugt ist dazu ein insbesondere wenigstens teilweise automatisierter und insbesondere kontrollierter abrasiver Strahlprozess. Möglich sind auch andere Abtragungsverfahren.

Vorzugsweise ist die Oberflächenrauheit des Außenabschnitts wenigstens teilweise und insbesondere vollständig unterhalb wenigstens einer Beschichtung angeordnet. Insbesondere ist der Außenabschnitt wenigstens teilweise und insbesondere vollständig unterhalb der Beschichtung angeordnet. Insbesondere umfasst die Fahrradkomponente wenigstens eine über der Oberflächenrauheit angeordnete Beschichtung. Möglich ist auch, dass die Oberflächenrauheit des Außenabschnitts wenigstens teilweise freiliegend ausgebildet ist. Insbesondere ist der Außenabschnitt in einem im bestimmungsgemäßen Montagezustand sichtbaren Teil des Komponentenkörpers angeordnet. Dabei muss der Außenabschnitt selbst nicht sichtbar sein.

Die Oberflächenrauheit ist dabei insbesondere wie zuvor für das Verfahren beschrieben ausgebildet. Insbesondere weist die Oberflächenrauheit die zuvor beschriebenen Eigenschaften auf. Insbesondere weist die Oberflächenrauheit die zuvor beschriebenen Parameter zur Rauheit und vorzugsweise die Mittenrauwerte auf. Insbesondere ist die Oberflächenrauheit wie zuvor beschrieben an der Fahrradkomponente angeordnet. Insbesondere ist auch die Beschichtung wie zuvor beschrieben ausgebildet. Insbesondere ist der Außenabschnitt wie zuvor beschrieben angeordnet und insbesondere ausgebildet. Die Fahrradkomponente ist insbesondere wenigstens teilweise mit den Eigenschaften ausgestattet, wie sie zuvor im Rahmen des Verfahrens beschrieben wurden. Die erfindungsgemäße Fahrradkomponente ist insbesondere eine Felge.

Im Rahmen der vorliegenden Erfindung wird unter der Oberflächenrauheit insbesondere eine Gestaltabweichung wenigstens dritter Ordnung, vorzugsweise wenigstens vierter Ordnung und insbesondere dritter bis fünfter Ordnung verstanden. Insbesondere wird unter der Oberflächenrauheit keine Gestaltabweichung erster und/oder zweiter Ordnung verstanden. Möglich ist, dass unter der Oberflächenrauheit keine Gestaltabweichung dritter Ordnung verstanden wird. Insbesondere werden zur Definition der Gestaltabweichung und/oder der Oberflächenrauheit hier die Ausführungen nach DIN 4760 (Stand am Anmeldetag) durch Bezugnahme vollumfänglich in die Offenbarung aufgenommen.

Insbesondere wird unter der Oberflächenrauheit kein makroskopisches und/oder mit bloßem Auge sichtbares Muster verstanden. Insbesondere weist die Oberflächenrauheit keine makroskopischen und/oder mit bloßem Auge sichtbaren Einzelstrukturelemente und beispielsweise Erhebungen und/oder Vertiefungen auf. Insbesondere wird unter der Oberflächenrauheit eine Flächenerscheinung verstanden, welche makroskopisch und/oder mit bloßem Auge als eine durchgehend aufgeraute Fläche wahrnehmbar ist. Insbesondere werden unter der Oberflächenrauheit keine Ornamente oder mit bloßem Auge gezielt wahrnehmbare Einzelstrukturen verstanden.

Durch die Ausstattung des Formbereichs mit der Oberflächenrauheit wird insbesondere auch eine gezielte Oberflächenrauheit des Außenabschnitts erzeugt. Insbesondere weist der Außenabschnitt eine Oberflächenrauheit auf, welche durch die Oberflächenrauheit des Formbereichs erzeugt ist. Insbesondere weist die Oberflächenrauheit des Außenabschnitts die gleichen Parameter oder zumindest näherungsweise die gleichen Parameter wie die Oberflächenrauheit des Formbereichs auf.

Insbesondere ist der Außenabschnitt in einem im fertigen Zustand des Komponentenkörpers sichtbaren Bereich des Komponentenkörpers angeordnet. Dabei kann der im sichtbaren Bereich angeordnete Außenabschnitt selbst nicht sichtbar sein.

Beispielsweise kann der Außenabschnitt unter einer Beschichtung oder dergleichen angeordnet sein. Möglich ist, dass der Außenabschnitt selbst auch sichtbar ist.

Insbesondere wird unter dem Formbereich derjenige Bereich des Formwerkzeugs verstanden, welcher den Außenabschnitt des Komponentenkörpers formt. Das Formwerkzeug kann weitere Bereiche zur Formung anderer Abschnitte des Komponentenkörpers umfassen. Insbesondere wird unter dem Außenabschnitt derjenige Abschnitt des Komponentenkörpers verstanden, welcher eine Oberflächenrauheit aufweist, welche durch die Oberflächenrauheit des Formbereichs erzeugt ist.

Vorzugsweise ist die Oberflächenrauheit des Formbereichs dazu geeignet und ausgebildet, einer Bildung von Lufteinschlüssen und insbesondere Luftblasen und/oder Trockenstellen (Bereiche ohne ausreichendes Matrixmaterial) während der Formgebung im Formwerkzeug entgegen zu wirken. Insbesondere wird einem Auftreten von Lufteinschlüssen dadurch entgegenwirkt, dass zwischen dem Formbereich und dem Außenabschnitt vorhandene Luft entlang des (aufgerauten) Außenabschnitts flächig verteilt wird und insbesondere dort entweichen kann. Insbesondere wird einem Auftreten von Trockenstellen dadurch entgegenwirkt, dass ein Matrixmaterial des Faserverbundwerkstoffs (z. B. Harz) entlang des (aufgerauten) Formbereichs flächiger bzw. gleichmäßiger verteilt wird. Die hier beschriebenen Oberflächenrauheiten des Formbereichs können dazu vorteilhaft eingesetzt werden.

Vorzugsweise ist die Oberflächenrauheit des Formbereichs dazu geeignet und ausgebildet, eine Oberflächenrauheit auf dem Außenabschnitt zu erzeugen, welche (mit dem bloßen Auge wahrnehmbare) Oberflächenfehler des Außenabschnitts wenigstens teilweise optisch verschleiert bzw. überdeckt. Insbesondere wird mit der Oberflächenrauheit des Formbereichs eine Oberflächenrauheit auf dem Außenabschnitt erzeugt, durch welche der Formbereich optisch matt bzw. mattiert erscheint. Insbesondere wird mit der Oberflächenrauheit des Formbereichs ein Glanz auf dem Außenabschnitt verhindert. Die hier beschriebenen Oberflächenrauheiten des Formbereichs können dazu vorteilhaft eingesetzt werden.

Im Rahmen der vorliegenden Erfindung sind die Oberflächenfehler insbesondere solche, welche während der Herstellung des Komponentenkörpers im Formwerkzeug entstanden sind.

Weitere Vorteile und Merkmale der vorliegenden Erfindung ergeben sich aus der Beschreibung der Ausführungsbeispiele, welche mit Bezug auf die beiliegenden Figuren im Folgenden erläutert werden.

In den Figuren zeigen:
- Fig. 1: eine rein schematische Seitenansicht eines Fahrrads;
- Fig. 2: eine stark schematische Darstellung einer erfindungsgemäß hergestellten Fahrradkomponente in einem Formwerkzeug in einer geschnittenen Ansicht;
- Fig. 3: eine stark schematische Darstellung einer erfindungsgemäßen Fahrradkomponente in einer geschnittenen Ansicht;
- Fig. 4: eine stark schematische Darstellung einer weiteren erfindungsgemäß hergestellten Fahrradkomponente in einem Formwerkzeug in einer geschnittenen Ansicht; und
- Fig. 5: eine stark schematische Darstellung eines Formwerkzeugs in einer Seitenansicht.

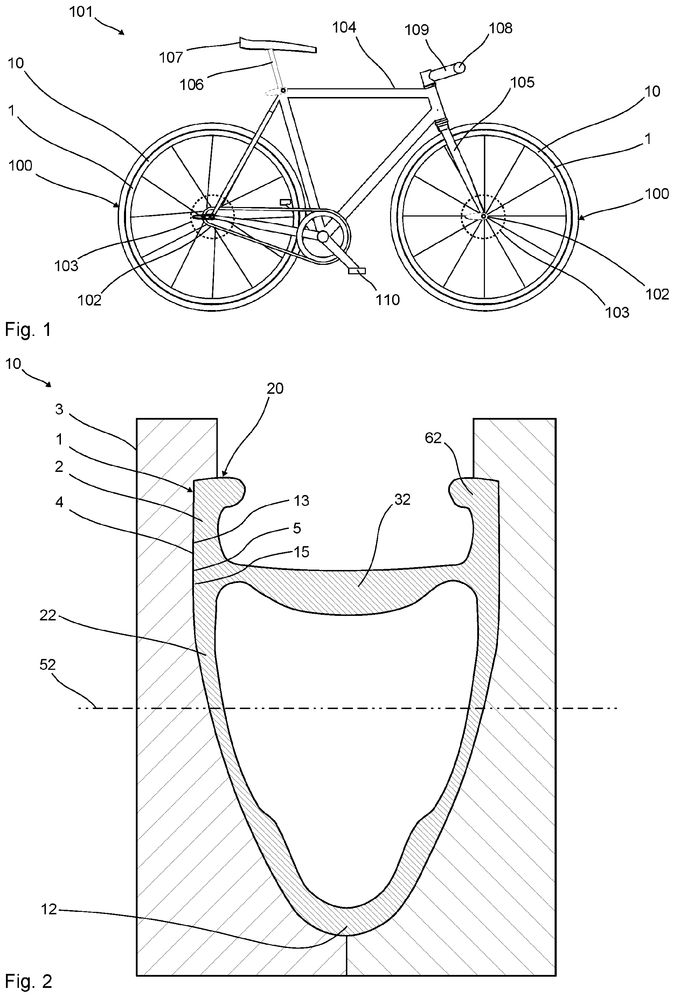

Die Figur 1 zeigt ein als ein Rennrad ausgebildetes Fahrrad 101 mit einer nach dem erfindungsgemäßen Verfahren hergestellten Fahrradkomponente 10. Das Fahrrad 101 kann auch als ein Mountainbike oder als ein anderer Fahrradtyp ausgebildet sein. In jeglicher Ausführung kann das Fahrrad 101 muskelbetrieben oder auch teilweise muskelbetrieben und beispielsweise als ein E-Bike ausgebildet sein. Die Fahrradkomponente 10 wird hier beispielhaft durch die Felgen 1 der Laufräder 100 des Fahrrads 101 bereitgestellt.

Das Fahrrad 101 weist zwei Laufräder 100 auf, welche hier mit jeweils einer Nabe 102 und einer Felge 1 ausgestattet sind. Das Fahrrad 101 umfasst einen Rahmen 104 und eine Gabel 105, an denen jeweils eines der Laufräder 100 aufgenommen ist. Weiterhin umfasst das Fahrrad 101 eine Sattelstütze 106 mit einem daran befestigten Sattel 107 und einen Lenker 108, welcher über einen Vorbau 109 am Rahmen 104 befestigt ist. Zudem verfügt das Fahrrad 101 über eine Scheibenbremsanlage mit zwei Bremsen 103. Als Teil eines Pedalantriebs 110 umfasst das Fahrrad 101 hier eine Kettenschaltung.

Mit Bezug zu der Figur 2 wird das erfindungsgemäße Verfahren zur Herstellung der Fahrradkomponente 10 am Beispiel einer Felge 1 näher vorgestellt.

Die Felge umfasst hier als Komponentenkörper 20 einen Felgenkörper 2, welcher durch einen Felgenboden 12 und ein Felgenbett 32 sowie zwei den Felgenboden 12 mit dem Felgenbett 32 verbindenden Felgenflanken 22 gebildet wird. An an einem radial äußeren Bereich des Felgenkörpers 2 gehen die Felgenflanken 22 hier in Felgenhörner 62 über.

Die Felge 1 wird aus einem Faserverbundwerkstoff in einem Formwerkzeug 3, auch als Mold bezeichnet, geformt. Das Formwerkzeug 3 ist hier mehrteilig ausgebildet. In der hier gezeigten Darstellung ist der Felgenkörper 2 ausgeformt und befindet sich noch im Formwerkzeug **3.** Dabei liegen zwei Teile des Formwerkzeugs 3 noch am Felgenkörper 2 an, welche unter anderem zur Ausformung der Felgenflanken 22 dienen. Weitere Teile des Formwerkzeugs 3 wurden bereits entfernt wurden.

Der Faserverbundwerkstoff umfasst insbesondere wenigstens einen Faserwerkstoff und wenigstens ein Matrixmaterial. Beispielsweise umfasst der Faserwerkstoff Kohlefasern, Glasfasern, Aramidfasern oder andere geeignete Fasermaterialien. Das Matrixmaterial umfasst beispielsweise wenigstens einen duroplastischen Kunststoff und/oder wenigstens einen thermoplastischen Kunststoff oder einen anderen geeigneten Werkstoff. Beispielsweise kann ein Epoxidharz eingesetzt werden.

Um die Felge 1 mit einer besonders hohen Oberflächenqualität formen zu können, ist das Formwerkzeug 3 mit einem Formbereich 13 mit einer gezielten Oberflächenrauheit 5 ausgestattet. Der Formbereich 13 dient zur Ausformung eines Außenabschnitts 4 des Felgenkörpers 2. Dabei ist der Formbereich 13 hier so angeordnet, dass sich der Außenabschnitt 4 entlang der äußeren bzw. sichtbaren Seite der Felgenflanken 22 und des Felgenbodens 12 erstreckt. Der Außenabschnitt 4 erstreckt sich hier sowohl radial oberhalb als auch radial unterhalb einer Mittellinie 52 des Felgenkörpers 2 bzw. der Felgenflanken 22.

Aufgrund der Oberflächenrauheit 5 im Formbereich 13 weist der geformte Außenabschnitt 4 eine besonders hohe Sichtqualität auf, welche frei von unerwünschten Oberflächenfehlern ist. Auf eine aufwendige Nachbearbeitung nach der Entnahme aus dem Formwerkzeug 3 zur Beseitigung von Oberflächenfehlern am Außenabschnitt 4 kann hier verzichtet werden.

Alternativ kann sich der Außenabschnitt 4 auch nur über einen Teil der hier dargestellten Außenfläche des Felgenkörpers 2 erstrecken, beispielsweise nur abschnittsweise über die Felgenflanken 22. Im Formwerkzeug 3 ist dann ein entsprechend angeordneter Formbereich 13 vorgesehen.

Der hier gezeigte Formbereich 13 ist beispielsweise mit einer Oberflächenrauheit 5 mit einem Mittenrauwert Ra zwischen 1,4 µm und 1,9 µm und bevorzugt mit einem Mittenrauwert zwischen 1,6 µm und 1,7 µm ausgestattet. Es können noch andere geeignete Rauheiten vorgesehen sein. Die Oberflächenrauheit 5 des Formbereichs 13 überträgt sich entsprechend auf den damit geformten Außenabschnitt 4.

Eine solche Oberflächenrauheit 5 hat sich in Versuchen als besonders vorteilhaft erwiesen. Beispielsweise konnte eine erhebliche Verringerung von unerwünschten Lufteinschlüssen zwischen Formbereich 13 und Außenabschnitt 4 während der Aushärtung des Felgenkörpers 2 erreicht werden. Das ist ein besonders vorteilhafter Effekt, denn dadurch können problematische harzarme Zonen an der sichtbaren Fläche reduziert und sogar gänzlich vermieden werden. Zudem zeigte sich aufgrund der Oberflächenrauheit 5 im Formbereich 13 auch eine erheblich verbesserte Lackhaftung bei nachträglichen Lackierprozessen der Felge 1.

Beispielsweise wird die Oberflächenrauheit 5 mittels einer Laserbehandlung erzeugt, sodass der Formbereich 13 eine Lasertexturierung 15 erhält. Möglich sind auch andere Verfahren zur Oberflächentexturierung im Formwerkzeug 3, beispielsweise Strahlverfahren oder dergleichen.

Die Felge 1 kann in einer hier nicht näher gezeigten Bauweise auch durch wenigstens zwei Felgenteile mit jeweils wenigstens einer Felgenflanke 22 bereitgestellt werden. Dann werden die Felgenteile beispielsweise in separaten Formwerkzeugen 3 mit jeweils einem Formbereich 13 oder auch nacheinander in dem Formwerkzeug 3 gefertigt. Anschließend werden die Felgenteile zusammengefügt.

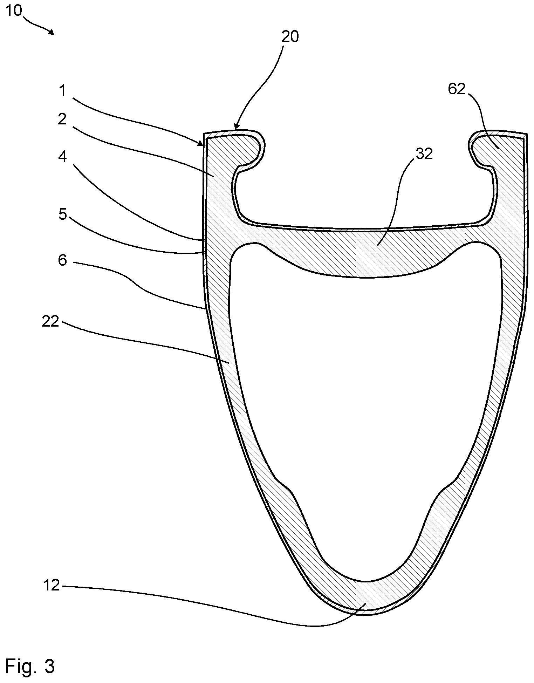

Die Figur 3 zeigt den mit Bezug zu der Figur 2 beschriebenen Felgenkörper 2 nach der Entnahme aus dem Formwerkzeug 3. Der Außenabschnitt 4 wurde hier mit einer Beschichtung 6 und beispielsweise einer Lackierung ausgestattet.

Aufgrund der Oberflächenrauheit 5 im Formbereich 13 und der dadurch auch am Außenabschnitt 4 ausgebildeten Oberflächenrauheit 5 konnte die Beschichtung 6 aufgetragen werden, ohne dass zuvor eine mechanische oder nicht mechanische Oberflächenbehandlung des Außenabschnitts 4 nötig war. Dazu wurde die Oberflächenrauheit 5 im Formbereich 13 so gewählt, dass diese die Haftung für die aufzutragende Beschichtung 6 verbessert. Möglich ist aber auch, dass die Felge 1 nach der Entnahme aus dem Formwerkzeug 3 bereits die endgültige Sichtqualität aufweist und keine Beschichtung 6 erfährt.

Die Beschichtung 6 wurde hier auch in Bereichen aufgetragen, welche später nicht sichtbar unterhalb eines Reifens angeordnet sind.

Bei der hier gezeigten Felge 1 kann es sich auch um eine Fahrradkomponente 10 handeln, welche mit einer Oberflächenrauheit ausgestattet ist, welche nicht nach dem erfindungsgemäßen Verfahren hergestellt ist. Beispielsweise kann die Oberflächenrauheit 5 am Außenabschnitt 4 durch einen der Ausformung nachgelagerten automatisierten und kontrollierten Abrasivstrahlprozess erfolgen.

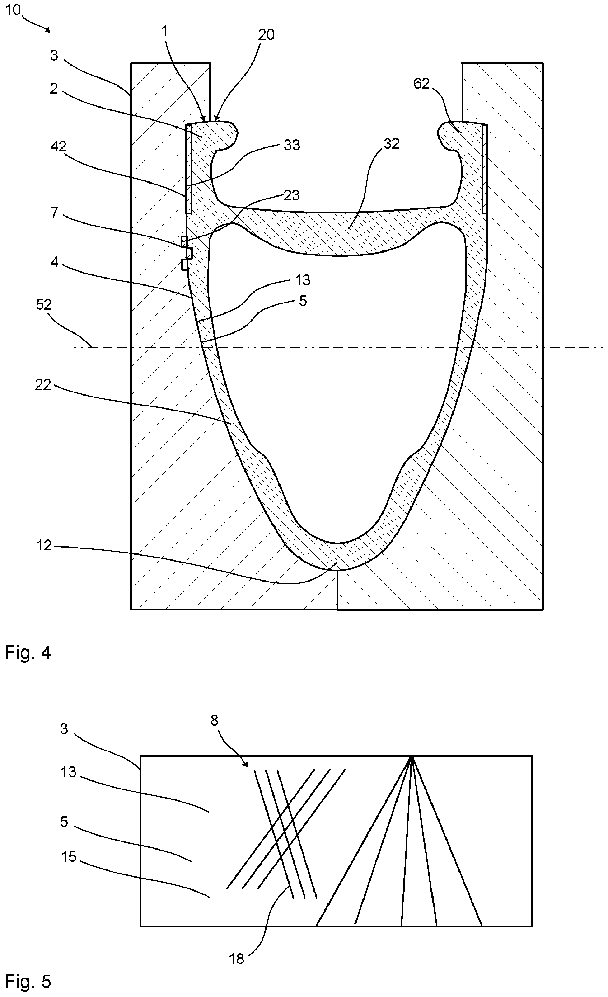

Die Figur 4 zeigt eine Ausgestaltung des mit Bezug zu der Figur 2 beschriebenen Verfahrens, wobei die Felge 1 hier mit Bremsflanken 42 ausgestattet wird. Zur Ausformung der Bremsflanken 42 ist das Formwerkzeug 3 mit Bremsflankenformbereichen 33 ausgestattet. In den Bremsflankenformbereichen 33 sind hier nicht näher dargestellte Reibelemente angeordnet, welche eine für Felgenbremsbeläge geeignete Reibfläche am Felgenkörper ausformen. Die Reibelemente umfassen beispielsweise Erhebungen und/oder Vertiefungen, welche um mehr als das hundertfache größer als der Mittenrauwert der Oberflächenrauheit 5 des Formbereichs 13 sind.

Je nach gewünschter Oberflächenqualität der Bremsflanke 42 kann der Bremsflankenformbereich 33 ebenfalls mit der Oberflächenrauheit 5 ausgestattet sein oder eine andere oder auch keine gezielte Oberflächenrauheit 5 aufweisen.

Zusätzlich oder alternativ wird die Felge 1 hier mit Ornamenten 7 und beispielsweise einem Schriftzug oder einem Logo oder dergleichen ausgestattet. Zur Erzeugung der Ornamente 7 weist der Formbereich 13 Formelemente 23 auf, welche als Negativform des gewünschten Ornaments 7 dienen.

Die Oberflächenrauheit 5 erstreckt sich hier über die Formelemente 23. Dadurch wird auch für die Ornamente 7 eine besonders hohe Sichtqualität erreicht. Zudem wird auch auf den Ornamenten 7 eine besonders günstige Haftung für eine Beschichtung 6 erreicht.

Es kann aber auch vorgesehen sein, dass die Formelemente 23 außerhalb des Formbereichs 13 angeordnet sind und keine Oberflächenrauheit 5 aufweisen. Beispielsweise können dadurch gezielte Matt-/Glanzflächen erzeugt werden. So können die Ornamente 7 durch die fehlende Oberflächenrauheit 5 besonders unaufwendig hervorgehoben werden können.

Die Figur 5 zeigt ein Formwerkzeug 3, bei welchem der Formbereich mit Überlagerungsstrukturen 8 zur Vermeidung von Lufteinschlüssen und Trockenstellen ohne Matrixmaterial ausgestattet ist. Die Geometrie der Überlagerungsstrukturen 8 ist hier nur rein schematisch skizziert. Die Überlagerungsstrukturen 8 sind hier Teil einer Lasertextur 15 und werden mittels einer gezielten Führung bzw. Rasterung des Lasers erzeugt. Die Überlagerungsstrukturen 8 weisen hier eine im Wesentlichen gleiche Oberflächenrauheit 5 wie der übrige Formbereich 13 auf. Bei Bedarf kann jedoch auch eine Ausführung mit einer gezielt unterschiedlichen Oberflächenrauheit 5 vorgesehen sein.

Das Formwerkzeug 3 ist hier zudem mit Entlüftungskaminen 18 ausgestattet, um der Bildung von Lufteinschlüssen und Trockenstellen noch wirksamer entgegen zu wirken. Dabei sind die Entlüftungskamine 18 hier Teil des Formbereichs 13 und werden hier durch die Überlagerungsstrukturen 8 bereitgestellt. Die Entlüftungskamine können auch andere als die hier nur rein schematisch skizzierten Ausrichtungen bzw. Geometrien aufweisen.

Die hier vorgestellte Erfindung bietet eine erhebliche und zugleich besonders unaufwendig umsetzbare Verbesserung der Lackhaftung. Zudem kann vor dem Lackieren auf eine mechanische (zum Beispiel Schleifen) oder chemische (zum Beispiel Primern) Vorbehandlung verzichtet werden. Des Weiteren sind zur Erzielung einer haltbaren Lackierung erheblich weniger Lackschichten notwendig. Dadurch weist die hergestellte Fahrradkomponente 10 ein erheblich reduziertes Gewicht auf, was besonders bei Wettkampffahrrädern von großem Vorteil ist. Zudem können Beschichtungen 6 bzw. Lackierungen sogar gänzlich eingespart werden. Aufgrund der erheblich verbesserten Sichtqualität bereits nach dem Ausformen können Folgeoperationen eingespart werden. So ergeben sich eine besonders hohe Effektivität und zugleich eine vorteilhafte Umweltbilanz. Die Erfindung bietet zudem eine erheblich verbesserte Reproduzierbarkeit.

Es hat sich gezeigt, dass mit der Erfindung auch eine Decal Applikation und/oder Haftung erheblich verbessert werden kann. Besondere Vorteile haben sich auch bei einer einschichtigen Lackierung ohne Klarlack gezeigt. Bei der Erfindung können im Rahmen der Beschichtung auch nur ein Beflammen und zugleich ein Verzicht auf Einbrennzyklen erfolgen, was zu erheblichen Einsparungen führt.

Zusätzlich oder alternativ zu der Felge 1 kann auch eine andere Fahrradkomponente 10 des Fahrrads 101 nach dem hier beschriebenen Verfahren hergestellt werden. Beispielsweise können die Nabe 102, die Bremse 103, der Rahmen 104, die Gabel 105, die Sattelstütze 106, der Lenker 108 und/oder der Vorbau 109 eine erfindungsgemäß hergestellte Fahrradkomponente 10 darstellen, deren Komponentenkörper 20 in einem geeigneten Formwerkzeug 3 geformt wird.

### Bezugszeichenliste:

| | | | |
|---|---|---|---|
| 1 | Felge | 42 | Bremsflanke |
| 2 | Felgenkörper | 52 | Mittellinie |
| 3 | Formwerkzeug | 62 | Felgenhorn |
| 4 | Außenabschnitt | 100 | Laufrad |
| 5 | Oberflächenrauheit | 101 | Fahrrad |
| 6 | Beschichtung | 102 | Nabe |
| 7 | Ornament | 103 | Bremse |
| 8 | Überlagerungsstruktur | 104 | Rahmen |
| 10 | Fahrradkomponente | 105 | Gabel |
| 12 | Felgenboden | 106 | Sattelstütze |
| 13 | Formbereich | 107 | Sattel |
| 15 | Lasertextur | 108 | Lenker |
| 18 | Entlüftungskamin | 109 | Vorbau |
| 20 | Komponentenkörper | | |
| 22 | Felgenflanke | | |
| 23 | Formelement | | |
| 32 | Felgenbett | | |
| 33 | Bremsflankenformbereich | | |

## Patentansprüche

1. Verfahren zur Herstellung einer Fahrradkomponente (10) mit wenigstens einem Komponentenkörper (20), welcher wenigstens zum Teil aus wenigstens einem Faserverbundwerkstoff in wenigstens einem Formwerkzeug (3) geformt wird,
wobei wenigstens ein für eine Formung wenigstens eines Außenabschnitts (4) des Komponentenkörpers (20) dienender Formbereich (13) des Formwerkzeugs (3) gezielt mit wenigstens einer Oberflächenrauheit (5) ausgestattet wird und wobei mittels der Oberflächenrauheit des Formbereichs auch eine gezielte Oberflächenrauheit für den Außenabschnitt während der Erzeugung des Außenabschnitts hergestellt wird,
**dadurch gekennzeichnet,**
**dass** der Formbereich (13) auf einen Mittenrauwert von wenigstens 1 Mikrometer und maximal 4 Mikrometer aufgeraut wird, insbesondere um Oberflächenfehlern des geformten Außenabschnitts (4) entgegen zu wirken.

2. Verfahren nach dem vorhergehenden Anspruch, wobei als Fahrradkomponente (10) eine Felge (1) für ein Laufrad (100) hergestellt wird und wobei die Felge (1) wenigstens einen den Komponentenkörper (20) bereitstellenden Felgenkörper (2) mit wenigstens zwei Felgenflanken (22) umfasst.

3. Verfahren nach einem der vorhergehenden Ansprüche, wobei der Außenabschnitt (4) nach der Formung beschichtet wird, ohne zuvor eine abtragende Oberflächenbehandlung erfahren zu haben und wobei eine insbesondere nach außen abschließende Beschichtung (6) direkt auf den Außenabschnitt (4) aufgetragen wird.

4. Verfahren nach einem der vorhergehenden Ansprüche, wobei der Formbereich (13) auf einen Mittenrauwert von maximal 3 Mikrometer aufgeraut wird.

5. Verfahren nach einem der vorhergehenden Ansprüche, wobei die Oberflächenrauheit (5) des Formbereichs (13) mittels Kugelstrahlen und/oder mittels einer Lasertexturierung erzeugt wird, sodass der geformte Außenabschnitt (4) eine Lasertextur (15) aufweist.

6. Verfahren nach dem vorhergehenden Anspruch, wobei wenigstens ein Laser rasterartig und/oder mit unterschiedlicher Intensität und/oder Geschwindigkeit und/oder Häufigkeit über den Formbereich (13) bewegt wird und wobei der Formbereich (13) dadurch mit Überlagerungsstrukturen (8) ausgestattet wird und wobei die Überlagerungsstrukturen (8) die gleiche oder eine gezielt unterschiedliche Oberflächenrauheit (5) zum übrigen Formbereich aufweisen.

7. Verfahren nach einem der vorhergehenden Ansprüche, wobei das Formwerkzeug (3) mit Entlüftungskaminen (18) ausgestattet wird und wobei der mit der Oberflächenrauheit (5) ausgestattete Formbereich (13) sich nur über die Entlüftungskamine (18) erstreckt oder wobei die Entlüftungskamine (18) sich nur über einen Teilbereich des Formbereichs (13) erstrecken.

8. Verfahren nach dem vorhergehenden Anspruch und nach Anspruch 6, wobei die Entlüftungskamine (18) durch die Überlagerungsstrukturen (8) bereitgestellt werden und/oder wie die Überlagerungsstrukturen (8) erzeugt werden.

9. Verfahren nach einem der vorhergehenden Ansprüche, wobei der Formbereich (13) derart im Formwerkzeug (3) angeordnet wird, dass sich der Außenabschnitt (4) über wenigstens 50% und vorzugsweise wenigstens 75% einer Außenseite des Komponentenkörpers (20), vorzugsweise wenigstens einer Felgenflanke (22) des Felgenkörpers (2), erstreckt.

10. Verfahren nach Anspruch 2, wobei der Formbereich (13) derart im Formwerkzeug (3) angeordnet wird, dass sich der Außenabschnitt (4) wenigstens über die Felgenflanken (2) erstreckt und vorzugsweise wenigstens radial unterhalb einer Bremsflanke (42) und/oder einer Mittellinie (52) der Felgenflanke (22) angeordnet ist.

11. Verfahren nach Anspruch 2, wobei das Formwerkzeug (3) wenigstens einen Bremsflankenformbereich (33) umfasst und wobei der Bremsflankenformbereich (33) mit Reibelementen ausgestattet wird, welche wenigstens um den Faktor 100 größer als ein Mittenrauwert der Oberflächenrauheit (5) des Formbereichs (13) sind.

12. Verfahren nach einem der vorhergehenden Ansprüche, wobei der Formbereich (13) mit einer durchgehenden und/oder konstanten Oberflächenrauheit (5) ausgestattet wird oder wobei der Formbereich (13) mit wenigstens zwei unterschiedlichen Oberflächenrauheiten (5) ausgestattet wird.

13. Verfahren nach einem der vorhergehenden Ansprüche, wobei der Formbereich (13) Formelemente (23) zur Formung von erhabenen und/oder eingelassenen Ornamenten (7) auf dem Außenabschnitt (4) umfasst, sodass sich die Oberflächenrauheit (5) auch über die Formelemente (23) erstreckt.

14. Verfahren nach einem der vorhergehenden Ansprüche, wobei nach einer Entnahme des Komponentenkörpers (20) aus dem Formwerkzeug (3) wenigstens eine Oberflächenbehandlung des Außenabschnitts (4) zur Reduzierung von Unebenheiten vorgesehen ist und wobei die Oberflächenbehandlung durch das gezielte Ausstatten des Formbereichs (13) mit der Oberflächenrauheit (5) ersetzt wird.

15. Fahrradkomponente (10) mit wenigstens einem Komponentenkörper (20), hergestellt nach dem Verfahren nach einem der vorhergehenden Ansprüche.

## Claims

1. Method of manufacturing a bicycle component (10) having at least one component body (20), formed at least partially of at least one fibrous composite material in at least one shaping mold (3), wherein at least one shaping area (13) of the shaping mold (3), which serves to shape at least one outer section (4) of the component body (20), is provided with at least one intended surface roughness (5), and wherein the surface roughness of the shaping area also serves to provide an intentional surface roughness for the outer section during the generation of the outer section,
**characterized in**
**that** the shaping area (13) is roughened to an average roughness of at least 1 micrometer and maximally 4 micrometers, in particular to inhibit surface imperfections of the shaped outer section (4).

2. The method according to the preceding claim, wherein the bicycle component (10) manufactured is a rim (1) for a wheel (100), and wherein the rim (1) comprises at least one rim body (2) having at least two rim flanks (22), providing the component body (20).

3. The method according to any of the preceding claims, wherein the outer section (4) is coated after shaping, without first being subjected to an abrasive surface treatment, and wherein an in particular outwardly finishing coating (6) is applied directly on the outer section (4).

4. The method according to any of the preceding claims, wherein the shaping area (13) is roughened to an average roughness of maximally 3 micrometers.

5. The method according to any of the preceding claims, wherein the surface roughness (5) of the shaping area (13) is generated by means of shot peening and/or by means of laser texturing, so that the shaped outer section (4) shows a laser texture (15).

6. The method according to the preceding claim, wherein at least one laser is moved across the shaping area (13), in particular by way of raster scanning and/or at various intensities and/or velocities and/or frequencies, and wherein the shaping area (13) is thus provided with overlay structures (8), and wherein the overlay structures (8) show a surface roughness (5) that is the same as, or intentionally different from, the rest of the shaping area.

7. The method according to any of the preceding claims, wherein the shaping mold (3) is provided with vent flues (18), and wherein the shaping area (13) provided with the surface roughness (5) only extends over the vent flues (18), or wherein the vent flues (18) only extend over a subrange of the shaping area (13).

8. The method according to the preceding claim and according to claim 6, wherein the vent flues (18) are provided by the overlay structures (8) and/or are generated like the overlay structures (8).

9. The method according to any of the preceding claims, wherein the shaping area (13) is disposed in the shaping mold (3) such that the outer section (4) extends over at least 50% and preferably at least 75% of an outside surface of the component body (20), preferably of at least one rim flank (22) of the rim body (2).

10. The method according to claim 2, wherein the shaping area (13) is disposed in the shaping mold (3) such that the outer section (4) extends at least over the rim flanks (2) and preferably at least radially beneath a brake flank (42) and/or the centerline (52) of the rim flank (22).

11. The method according to claim 2, wherein the shaping mold (3) comprises at least one brake flank shaping area (33), and wherein the brake flank shaping area (33) is provided with friction members, which are larger than the average roughness of the surface roughness (5) of the shaping area (13) at least by a factor of 100.

12. The method according to any of the preceding claims, wherein the shaping area (13) is provided with a continuous and/or constant surface roughness (5), or wherein the shaping area (13) is provided with at least two different surface roughnesses (5).

13. The method according to any of the preceding claims, wherein the shaping area (13) comprises mold elements (23) for forming elevated and/or recessed ornaments (7) on the outer section (4), so that the surface roughness (5) also extends over the mold elements (23).

14. The method according to any of the preceding claims, wherein after removing the component body (20) from the shaping mold (3), at least one surface treatment of the outer section (4) is provided for reducing unevennesses, and wherein the surface treatment is replaced by controlled providing of the shaping area (13) with the surface roughness (5).

15. Bicycle component (10) comprising at least one component body (20), manufactured according to the method according to any of the preceding claims.

## Revendications

1. Procédé de fabrication d'un composant de bicyclette (10) avec au moins un corps de composant (20), lequel est formé au moins en partie à partir d'au moins une matière composite à base de fibres dans au moins un outil de formage (3),
sachant au moins qu'une zone de formage (13) de l'outil de formage (3) servant pour un formage d'au moins une section extérieure (4) du corps de composant (20) est dotée précisément d'au moins une rugosité de surface (5) et sachant qu'également une rugosité de surface précise pour la section extérieure est fabriquée au moyen de la rugosité de surface de la zone formée pendant la production de la section extérieure,
**caractérisé en ce que**
la zone formée (13) est rendue rugueuse à une valeur de rugosité moyenne d'au moins 1 micromètre et au maximum de 4 micromètres, en particulier pour agir en opposition aux défauts de surface de la section extérieure formée (4).

2. Procédé selon la revendication précédente, sachant qu'une jante (1) pour une roue de roulement (100) est fabriquée en tant que composant de bicyclette (10) et sachant que la jante (1) comprend au moins un corps de jante (2) fournissant le corps de composant (20) avec au moins deux flancs de jante (22).

3. Procédé selon l'une quelconque des revendications précédentes, sachant que la section extérieure (4) est revêtue après le formage sans avoir subi préalablement un traitement de surface par enlèvement de matière et sachant qu'un revêtement définitif en particulier vers l'extérieur (6) est appliqué directement sur la section extérieure (4).

4. Procédé selon l'une quelconque des revendications précédentes, sachant que la zone formée (13) est rendue rugueuse à une valeur de rugosité moyenne de 3 micromètres maximum.

5. Procédé selon l'une quelconque des revendications précédentes, sachant que la rugosité de surface (5) de la zone formée (13) est produite au moyen de grenaillage et/ou au moyen d'un texturage au laser de telle manière que la section extérieure formée (4) comporte une texture laser (15).

6. Procédé selon l'une quelconque des revendications précédentes, sachant qu'au moins un laser est déplacé en forme de trame et/ou avec une intensité et/ou vitesse et/ou fréquence différente sur la zone formée (13) et sachant que la zone formée (13) est dotée de ce fait de structures en superposition (8) et sachant que les structures en superposition (8) comportent la rugosité de surface (5) identique ou une rugosité de surface précisément différente de la zone formée restante.

7. Procédé selon l'une quelconque des revendications précédentes, sachant que l'outil de formage (3) est doté de conduits d'aération (18) et sachant que la zone formée (13) dotée de la rugosité de surface (5) ne s'étend que sur les conduits d'aération (18) ou sachant que les conduits d'aération (18) ne s'étendent que sur une zone partielle de la zone formée (13).

8. Procédé selon la revendication précédente et selon la revendication 6, sachant que les conduits d'aération (18) sont fournis par les structures en superposition (8) et/ou sont produits comme les structures en superposition (8).

9. Procédé selon l'une quelconque des revendications précédentes, sachant que la zone formée (13) est disposée de telle manière dans l'outil de formage (3) que la section extérieure (4) s'étend sur au moins 50 % et de préférence au moins sur 75 % d'un côté extérieur du corps de composant (20), de préférence au moins d'un flanc de jante (22) du corps de jante (2).

10. Procédé selon la revendication 2, sachant que la zone formée (13) est disposée dans l'outil de formage (3) de telle manière que la section extérieure (4) s'étend au moins sur les flancs de jante (2) et est de préférence disposée au moins radialement en dessous d'un flanc de freinage (42) et/ou d'une ligne médiane (52) du flanc de jante (22).

11. Procédé selon la revendication 2, sachant que l'outil de formage (3) comprend au moins une zone de formage de flanc de freinage (33) et sachant que la zone de formage de flanc de freinage (33) est dotée d'éléments de frottement, lesquels sont au moins du facteur 100 plus grand qu'une valeur de rugosité moyenne de la rugosité de surface (5) de la zone formée (13).

12. Procédé selon l'une quelconque des revendications précédentes, sachant que la zone formée (13) est dotée d'une rugosité de surface continue et/ou constante (5) ou sachant que la zone formée (13) est dotée d'au moins deux rugosités de surface différents (5).

13. Procédé selon l'une quelconque des revendications précédentes, sachant que la zone formée (13) comprend des éléments de formage (23) pour la formation d'ornements saillants et/ou noyés (7) sur la section extérieure (4) de telle manière que la rugosité de surface (5) s'étend également sur les éléments de formage (23).

14. Procédé selon l'une quelconque des revendications précédentes, sachant qu'au moins un traitement de surface de la section extérieure (4) est prévu pour réduire des inégalités après un enlèvement du corps de composant (20) de l'outil de formage (3) et sachant que le traitement de surface est remplacé par la dotation précise de la zone formée (13) de la rugosité de surface (5).

15. Composant de bicyclette (10) avec au moins un corps de composant (20), fabriqué selon l'une quelconque des revendications précédentes.
